# EUROPEAN PATENT APPLICATION

(11) **EP 2 835 981 A1**
(43) Date of publication of application: **11.02.2015**
(21) Application number: 14178802.6
(22) Date of filing: 28.07.2014
(51) Int. Cl.: H04N 21/482, H04N 21/45, H04N 21/475

(54) **Information processing device, information processing method, and program**

(30) Priority: 09.08.2013 JP 2013166191
(71) Applicant: Sony Corporation, Tokyo 108-0075 (JP)
(72) Inventor: Doi, Shouichi, Tokyo, 108-0075 (JP); Ishihara, Atsushi, Tokyo, 108-0075 (JP); Kurata, Yoshinori, Tokyo, 108-0075 (JP); Senuma, Hajime, Tokyo, 108-0075 (JP); Takada, Masayuki, Tokyo, 108-0075 (JP); Takeoka, Yoshiki, Tokyo, 108-0075 (JP); Morita, Masahiro, Tokyo, 108-0075 (JP)
(74) Representative: Witte, Weller & Partner Patentanwälte mbB

(57) **Abstract**

There is provided an information processing device including a processor configured to achieve a function of registering implicit preference information about a user on the basis of an activity of the user, a function of outputting a question to the user by voice on the basis of the implicit preference information, a function of acquiring an answer to the question from a voice spoken by the user, and a function of registering explicit preference information about the user depending on the answer.

## Description

### CROSS REFERENCE TO RELATED APPLICATIONS

This application claims the benefit of Japanese Priority Patent Application JP 2013-166191 filed August 9, 2013, the entire contents of which are incorporated herein by reference.

### BACKGROUND

The present disclosure relates to an information processing device, an information processing method, and a program.

There has been developed many technologies for extracting a user preference on content through content-usage behavior of the user and for recommending other content to the user according to the extracted preference. For example, JP 2011-107808A describes a technology for using both metadata of content and preference information about a user based on a history of content search performed by the user so as to reduce a processing load of content-based filtering that uses the metadata.

### SUMMARY

However, the user does not necessarily search for only preferred content, and it is unclear if the content obtained by the search matches with the user preference. If the user makes any explicit action (purchase of the content, and the like) following this search, it is recognized that the user preference is reflected on the search history. If not, it is difficult to treat the search history as information having an explicit meaning such as the user preference.

Accordingly, the present disclosure proposes a novel and improved information processing device, information processing method, and program that can convert information having a possibility of implicitly indicating a user preference into information that explicitly indicates the user preference and can use the converted information.

According to an embodiment of the present disclosure, there is provided an information processing device including a processor configured to achieve a function of registering implicit preference information about a user on the basis of an activity of the user, a function of outputting a question to the user by voice on the basis of the implicit preference information, a function of acquiring an answer to the question from a voice spoken by the user, and a function of registering explicit preference information about the user depending on the answer.

According to an embodiment of the present disclosure, there is provided an information processing method performed by a processor, the method including registering implicit preference information about a user on the basis of an activity of the user, outputting a question to the user by voice on the basis of the implicit preference information, acquiring an answer to the question from a voice spoken by the user, and registering explicit preference information about the user depending on the answer.

According to an embodiment of the present disclosure, there is provided a program for causing a computer to achieve a function of registering implicit preference information about a user on the basis of an activity of the user, a function of outputting a question to the user by voice on the basis of the implicit preference information, a function of acquiring an answer to the question from a voice spoken by the user, and a function of registering explicit preference information about the user depending on the answer.

According to one or more of embodiments of the present disclosure, it is possible that information having a possibility of implicitly indicating a user preference is converted into information that explicitly indicates the user preference, and the converted information is used.

### BRIEF DESCRIPTION OF THE DRAWINGS

FIG. 1 is a diagram showing a schematic configuration of an information processing system according to an embodiment of the present disclosure;
FIG. 2 is a block diagram showing a schematic configuration of a client device according to an embodiment of the present disclosure;
FIG. 3 is a block diagram showing a schematic configuration of a server device according to an embodiment of the present disclosure;
FIG. 4 is a block diagram showing a schematic functional configuration of an agent according to an embodiment of the present disclosure;
FIG. 5 is a flowchart showing an example of processing performed by an agent according to an embodiment of the present disclosure; and
FIG. 6 is a diagram illustrating an example of a network service using an embodiment of the present disclosure.

### DETAILED DESCRIPTION OF THE EMBODIMENT(S)

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. System Configuration
2. Functional Configuration
3. Processing Flow
4. Specific Example
4-1. Example of Network Service
4-2. Example of Scenario
5. Supplemental Remarks

### (1. System Configuration)

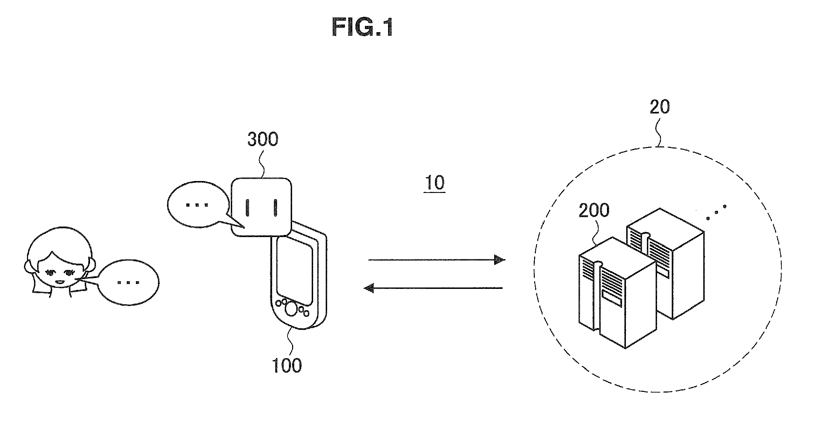

FIG. 1 is a diagram showing a schematic configuration of an information processing system according to an embodiment of the present disclosure. Referring to FIG. 1, a system 10 includes one or more client devices 100 and one or more server devices 200. The server 20 includes a single server device 200, or a plurality of cooperative server devices 200. The server 20 communicates with the one or more client devices 100 through a network, and provides the one or more client devices 100 with a service.

In the client device 100, an agent 300 operates. The agent 300 dialogues with a user of the client device 100 by voice for example, and performs various processing for the user on the basis of information obtained from the dialogue. Information processing for causing the agent 300 to operate may be mainly performed in the client device 100, or may be performed by being dispersed to the client device 100 and the server 20, or may be mainly performed in the server 20, for example.

### (Configuration of Client Device)

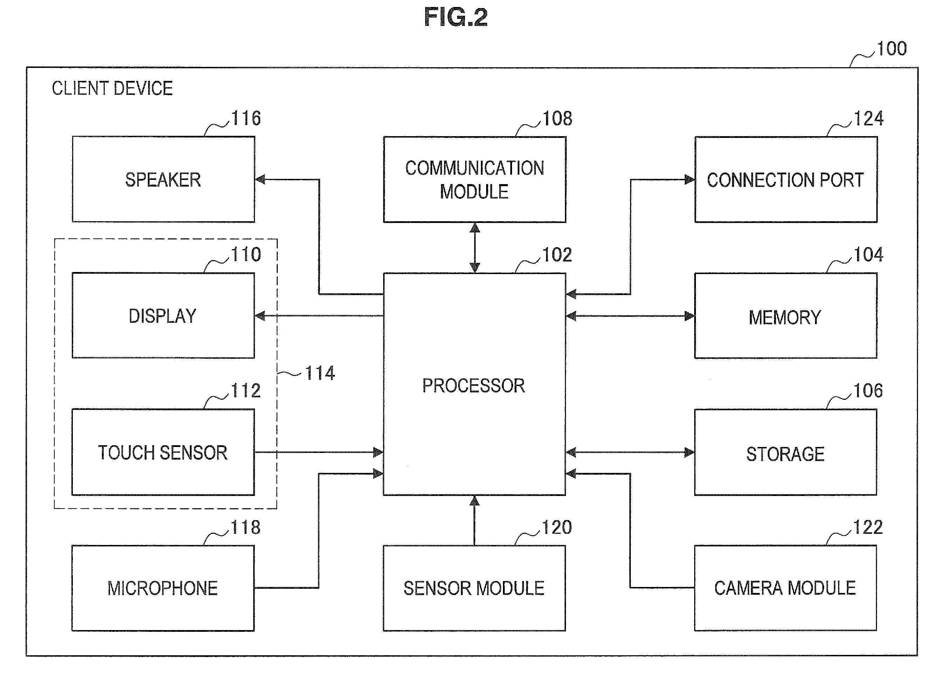

FIG. 2 is a block diagram showing a schematic configuration of the client device according to an embodiment of the present disclosure. Referring to FIG. 2, the client device 100 may include a processor 102, memory 104, storage 106, a communication module 108, a touchscreen 114 having a display 110 and a touch sensor 112, a speaker 116, a microphone 118, a sensor module 120, a camera module 122, and a connection port 124.

The processor 102 is implemented by a central processing unit (CPU), a digital signal processor (DSP), and an application specific integrated circuit (ASIC) for example, and achieves diverse functions by operating in accordance with a program stored in the memory 104. By controlling each part of the client device 100, the processor 102 acquires various types of input, and provides various types of output. Details of functions achieved by the processor 102 will be described later.

The memory 104 is implemented by semiconductor memory used as random access memory (RAM) or read only memory (ROM) for example. The memory 104 stores a program for causing the processer 102 to operate, for example. The program may be read from the storage 106 and may be temporarily loaded into the memory 104, or may be continuously stored into the memory 104, for example. For another example, the program may be received by the communication module 108, and may be temporarily loaded into the memory 104. The memory 104 further stores, temporarily or continuously, various types of data generated by processing of the processor 102.

The storage 106 is implemented by flash memory or a storage device utilizing a magnetic disk such as a hard disk drive (HDD), an optical disc, a magneto-optical disc, or the like. The storage 106 continuously stores a program for causing the processor 102 to operate, and various types of data generated by processing of the processor 102, for example. The storage 106 may include a removable medium, or may be built in the client device 100.

The communication module 108 is implemented by various types of communication circuits which performs wired or wireless network communications on the basis of control performed by the processor 102. In the case of performing the wireless communication, the communication module 108 may include an antenna. The communication module 108 performs a network communication according to a communication standard of the Internet, a local area network (LAN), or Bluetooth (registered trademark), for example. The communication module 108 can transmit information generated by the client device 100 to the server 20, another client device 100, or the like, and can receive various types of information from the sever 20 or the another client device 100.

The display 110 is implemented by a liquid crystal display (LCD) or an organic electro-luminescence (EL) display, for example. The display 110 displays various types of information as images in accordance with control performed by the processor 102. In the example shown in the FIG. 2, the touchscreen 114 including the display 110 and the touch sensor 112 is used as an input unit. Accordingly, the display 110 displays a graphical user interface (GUI) image which can be operated by the touch sensor 112.

The touch sensor 112 is implemented by a capacitive sensor that is arranged at a position corresponding to the display 110, for example. The touch sensor 112 acquires a touch operation performed by a user on a GUI image displayed on the display 110. Note that, in another embodiment, another input device such as a button and pointing device like a mouse and a touchpad may be adopted in addition or instead of the touch sensor 112.

The speaker 116 outputs the various types of information as sound in accordance with control performed by the processor 102. The microphone 116 acquires various kinds of sounds generated around the client device 100 such as a voice spoken by the user, and provides the processor 102 with the sounds as audio data.

The sensor module 120 is implemented by various types of sensors such as an acceleration sensor, a gyro sensor, a geomagnetic sensor, a photosensor, a pressure sensor, and a sound sensor, and processing circuits that pertain to the sensors. For example, the sensor module 120 acquires not only information about a state of the client device 100 itself such as acceleration acting on a case of the client device 100 and orientation of the case, but also information about environment surrounding the client device 100 such as brightness and noise around the client device 100. In addition, the sensor module 120 may include a global positioning system (GPS) sensor which receives a GPS signal and measures latitude, longitude, and height of the client device 100.

The camera module 122 is implemented by image sensors such as a charge coupled device (CCD) or a complementary metal oxide semiconductor (CMOS), an optical system such as a lens which controls image formation of a subject image on the image sensors, and a drive circuit for causing the image sensors and the optical system to drive. The image sensors image the subject image so as to generate a still image or a moving image, and the camera module 122 provides the processor 102 with the still image or the moving image as image data.

The connection port 124 is a port for directly connecting the client device 100 with an external device. For example, the connection port 124 is implemented by a universal serial bus (USB) port, an IEEE 1394 port, or a high-definition multimedia interface (HDMI) (registered trademark) port. The external device connected to the connection port 124 may be a display device (for example, external display), an input device (for example, keyboard and mouse), a storage device (for example, external HDD), or the like. However, the external device is not limited thereto.

The client device 100 including structural elements described above may be a smartphone, a tablet terminal, various types of personal computer (PC), or the like. Moreover, the client device 100 may be a media player, a video game console, a television, or the like. In this embodiment, the client device 100 can achieve functions of the information processing apparatus according to the embodiment of the present disclosure, by the client device 100 itself or in cooperation with the server device 200.

### (Configuration of Server Device)

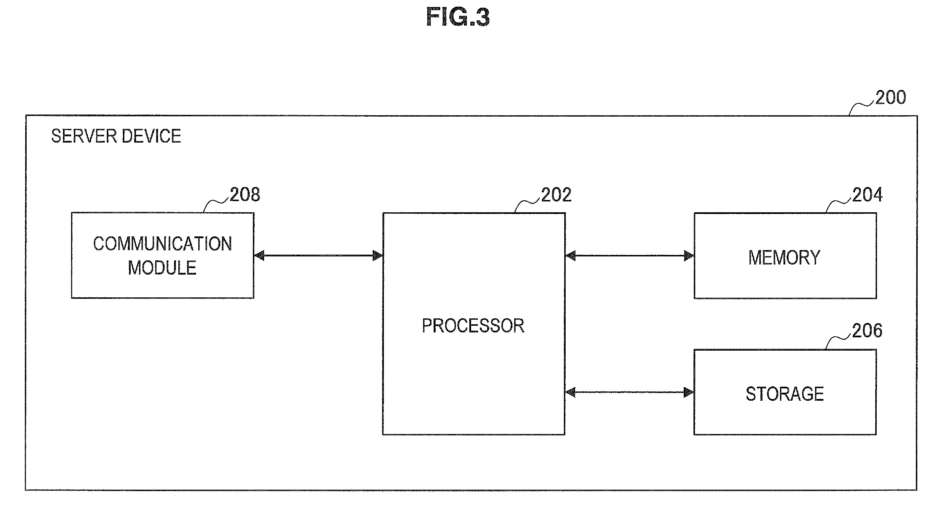

FIG. 3 is a block diagram showing a schematic configuration of a server device according to an embodiment of the present disclosure. Referring to FIG. 3, the server device 200 can include a processor 202, memory 204, storage 206, and a communication module 208.

In the following explanation, the server device 200 is described as a device whose main purpose is to provide the client device 100 with a service through a network, and which does not output information to the user, acquire input information, or the like, except in a case where the service itself is a setting operation. However, the server device 200 is not limited to such device. For example, the server device 200 may be a device having a configuration similar to the client device 100. That is, for example, it is possible that a desktop PC installed in a house of a user functions as the server device 200, and a smartphone carried by the user functions as the client device 100.

The processor 202 is implemented by a CPU, a DSP, and an ASIC for example, and achieves diverse functions by operating in accordance with a program stored in the memory 204. The processor 202 acquires information transmitted from the client device 100 through the communication module 208, and performs various types of processing on the basis of the information. The processor 202 transmits information about a processing result to the client device 100 through the communication module 208. The server device 200 may be able to provide a plurality of client devices 100 with services. Accordingly, the processor 202 may perform processing based on pieces of information transmitted from the respective client devices 100, and may transmit pieces of information about respective processing results with other client devices 100 that are different from the client devices 100 to which the pieces of original information are transmitted.

The memory 204 is implemented by semiconductor memory used as RAM or ROM for example. The memory 204 stores a program for causing the processer 202 to operate, for example. The program may be read from the storage 206 and may be temporarily loaded into the memory 204, or may be continuously stored into the memory 204, for example. For another example, the program may be received by the communication module 208, and may be temporarily loaded into the memory 204. The memory 204 further stores, temporarily or continuously, various types of data generated by processing of the processor 202.

The storage 206 is implemented by flash memory or a storage device utilizing a magnetic disk such as an HDD, an optical disc, a magneto-optical disc, or the like. The storage 206 continuously stores a program for causing the processor 202 to operate, and various types of data generated by processing of the processor 202, for example. The storage 206 may include a removable medium, or may be built in the server device 200.

The communication module 208 is implemented by various types of communication circuits which performs wired or wireless network communications in accordance with control performed by the processor 202. In the case of performing the wireless communication, the communication module 208 may include an antenna. The communication module 208 performs a network communication according to a communication standard of the Internet, a LAN, or Bluetooth (registered trademark), for example. The communication module 208 can transmit information generated by the server device 200 to the client device 100 or another server device 200, and can receive various types of information from the client device 100 or the another server device 200. In the case where the server 20 includes a plurality of cooperative server devices 200, processers 202 of the respective server devices 200 exchange information about processing with each other through communication modules 208.

### (2. Functional Configuration)

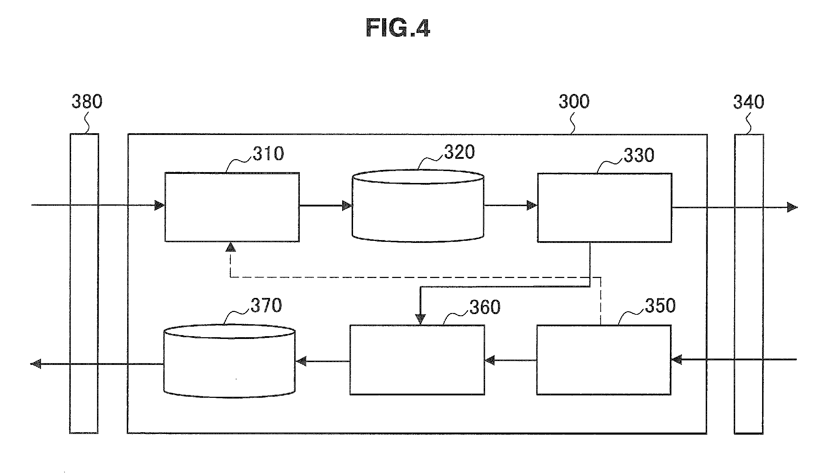

FIG. 4 is a block diagram showing a schematic configuration of an agent according to an embodiment of the present disclosure. With reference to FIG. 4, in the present embodiment, functions 310, 330, 350, and 360 are achieved as functions of the agent 300. In addition, in the agent 300, DB 320 and DB 370 are included as databases (DBs) to which each of the functions refers. Moreover, each of the functions exchanges information with the user through an input/output interface 340, and further exchanges information with another function of the agent 300 or with another function achieved by the client device 100 or the server 20 through a software interface 380.

The all functions described above may be achieved by the processor 102 of the client device 100 or by the processor 202 of the server device 200, for example. On the other hand, some of the functions may be achieved by the processor 102 of the client device 100, and the other functions may be achieved by the processor 202 of the server device200. In this case, the processor 102 and the processor 202 cooperate with each other through network communication between the communication modules 108 and 208. In the case where the server 20 includes a plurality of server devices 200, at least some of the functions may be achieved by being dispersed to the plurality of server devices 200. In this case, one of the functions may be achieved by being dispersed to the plurality of server devices 200, or one of the server devices 200 may achieve the plurality of functions. The DB 320 and the DB 370 may be achieved by the storage 106 of the client device 100 or the storage 206 of the server device 200, for example. Each of the DB 320 and the DB 370 may be achieved by storage in a separate device. Alternatively, each of the DB 320 and the DB 370 may be achieved by being dispersed to storages in a plurality of devices.

The input/output interface 340 may be achieved by the speaker 116 and the microphone 118, and/or the touchscreen 114 of the client device 100, for example. In a case where the functions of the agent 300 are achieved in the server 20, the information to be exchanged with the user using the input/output interface 340 is handled by each of the functions of the agent 300 through communication between the client device 100 and the server device 200. The software interface 380 is achieved by the processor 102 of the client device 100, or the processor 202 of the server device 200, for example. A target with which the functions of the agent 300 exchanges information through the software interface 380 may be a function achieved in the same processor 102 (or the same processor 202) as the agent 300. Accordingly, the software interface 380 does not necessarily mean an interface exchanging information between a device and another device. The software interface 380 may be an interface exchanging information within a device.

### (Implicit-Preference-Information Registration Function)

The function 310 is an implicit-preference-information registration function of registering implicit preference information about a user based on an activity of the user. The function 310 registers the implicit preference information in the DB 320. In the present embodiment, the function 310 registers the implicit preference information having a possibility of implicitly indicating the user preference on content such as video or music. In this case, the activity of the user is not limited to use of content through web browsing or through a network for example, but the activity of the user includes watching content provided as a broadcast program on a TV and recording the content by using a recorder. In addition, the activity of the user may be extracted from an action history of the user acquired by using an acceleration sensor, a GPS and the like. In this case, the action history does not necessarily relate to the content, and the action history may be a general action history of the user such as a trip or a dinner. In addition, it is possible for the function 310 to register the implicit preference information in association with information about a time period or a place in which the activity of the user is performed.

More specifically, for example, the function 310 registers implicit preference information based on a search history of information about content that the user executed on a web. The information about the content may include information about a genre of the content, a cast/player, a keyword included in a title or the content, and a like. The implicit preference information may be generated as a score on each piece of such information, for example. In this case, when the user searches information by keywords such as "sci-fi classic", a score on "sci-fi" that is one of video-content genres (for example, the video-content genres also include "comedy", "suspense", "horror" and the like) and a score on "classic" that is one of content tags (for example, the content tags also include "popular", "B movie", and the like) are increased.

Alternatively, for example, the function 310 registers implicit preference information based on a content usage history of the user. Though the user uses content by purchasing, renting, or the like, the content is not necessarily matches with the user preference. Accordingly, the information registered based on the content usage history can be the implicit preference information. For example, when the user purchases or rents the content online, the function 310 registers information about the content as the implicit preference information. On the other hand, for example, the function 310 may register, as the implicit preference information, information about content that the user watches in real time on the TV or content that the user records and watches by using the recorder. Here, the agent 300 may have a function of operateing the TV, the recorder, or the like owned by the user in accordance with voice input by the user. When content watching is started by controlling the TV and/or the recorder on the basis of the voice input, implicit preference information about the content may be registered.

Alternatively, for example, the function 310 registers implicit preference information based on an action history of the user. As described above, the action history to be used here does not necessarily relate to the content. For example, the function 310 extracts information about the content from an action history of the user which is provided on the basis of information acquired from an acceleration sensor and a GPS in the client device 100, and the function 310 registers the information as the implicit preference information. It is also possible for the function 310 to extract the information about the content from action plans of the user indicated by a schedule registered by the user. The extracted information may include a place itself such as a tourist spot, an attribute of a place such as a restaurant (a European cuisine, Japanese cuisine, or the like), and the like.

The function 310 may acquire information about an user's answer to the question from the function 350 described later, and may update or delete the implicit preference information registered in the DB 320 depending on the answer. For example, in a case of acquiring a negative answer to a question that is output from the function 330 and that inquires whether a preference target indicated by the implicit preference information matches with a preference of the user, the function 310 may delete the implicit preference information regarding the preference target from the DB 320. Alternatively, the function 310 may sort the implicit preference information to be registered, depending on an answer to a question that is output from the function 330 and that inquires whether the user is interested in the preference target. In this case, for example, when the answer shows that the user is not interested in a preference target, implicit preference information regarding the preference target may be deleted from the DB 320.

### (Question Output Function)

The function 330 is a question output function of outputting a question to the user on the basis of implicit preference information registered in the DB 320. The function 330 can output the question when the registered implicit preference information satisfies a certain condition. The function 330 outputs the question about the preference target indicated by the implicit preference information, to the user through the input/output interface 340. For example, the function 330 may output the question by voice from the speaker 116 of the client device 100. Alternatively, the function 330 may display the question as text on the display 110 of the client device 100.

For example, the function 330 may output a question to the user in a case where implicit preference information has already been registered in the DB 320 with regard to a preference target indicated by implicit preference information that has been newly registered in the DB 320. In this case, the question may inquire whether the preference target matches with the user preference, for example. On the other hand, the question may inquire whether a target other than the preference target does not match with the user preference.

Alternatively, for example, the function 330 may output a question to the user in a case where implicit preference information has already been registered in the DB 320 with regard to a preference target appearing in content that the user is watching. Also in this case, the question may inquire whether the preference target matches with the user preference, for example. In a case where there are a plurality of preference targets (for example, a plurality of casts, or a combination of a cast and a genre) appearing in the content and implicit preference information has already been registered in the DB 320 with regard to at least one of the preference targets, the function 330 may first output the question, such as described above, about a preference target (first preference target) for which implicit preference information is registered. In this case, after acquiring a negative answer to the question about the first preference target, the function 330 may further output a similar question about a second preference target (implicit preference information does not have to be registered at this time).

Alternatively, for example, the function 330 may output a question to the user depending on a relation between information about a time period or place that have been registered in association with the implicit preference information and information about a current time period or a current user position. The function 330 may output a question about the implicit preference information to the user in a case where the time period or the user position respectively corresponds or accords with the time period or place that have been registered in association with the implicit preference information. More specifically, for example, a question about a preference target indicated by registered implicit preference information may be output at a same time period or same place as a time period or place where the user used certain content and where implicit preference information was registered. In a similar way to the time period and the place, the question output function may output a question depending on a relation between environmental information such as weather or event information such as a birthday that are registered in association with the implicit preference information and current environmental information or current event information of the user, respectively.

Alternatively, for example, the function 330 may output a question to sort or select a plurality of pieces of implicit preference information registered on the basis of activities of the single user. For example, when the user watches certain content, implicit preference information regarding the plurality of preference targets may be registered, such as a genre of the content, a cast/player, and keywords included in a title or contents of the content. From among the preference targets, the function 330 may generate a question to select a preference target for which the implicit preference information is generated. For example, in a case where there are a plurality of casts/players in the content, the function 330 may output a question to inquire whether the user is interested in any one of the casts/players. In this case, implicit preference information regarding a cast/player to be registered (or, implicit preference information to remain from among the plurality of pieces of registered implicit preference information) may be decided depending on an answer to the question acquired by the function 350 described later. On the other hand, when recognizing explicit preference of the user from the answer to the question, the function 360 described later may register explicit preference information regarding the preference target.

### (Answer Acquisition Function)

The function 350 is an answer acquisition function of acquiring, through the input/output interface 340, a user's answer to the question output from the function 330. For example, the function 350 may acquire the answer from a user's spoken voice acquired by the microphone 118 of the client device 100. In this case, the function 350 may perform speech recognition based on the acquired voice data, and may convert the voice data into text. Alternatively, the function 350 may acquire the answer from touch input performed by the user and acquired through the touch sensor 112 of the client device 100. As necessary, the function 350 performs natural language processing such as text segmentation and syntactic analysis on the user's answer acquired as text for example, and recognizes semantic content of the text. Note that, detailed explanations of the speech recognition and the natural language processing are omitted because it is possible to appropriately adopt diverse known technologies. The function 350 provides the function 360 with the acquired answer. Alternatively, the function 350 may provide the function 310 with the acquired answer.

### (Explicit-Preference-Information Registration Function)

The function 360 is an explicit-preference-information registration function of registering explicit preference information about the user depending on the user's answer acquired by the function 350. The function 360 registers the explicit preference information to the DB 370. The explicit preference information is information that explicitly indicates a user preference for a preference target, for example. A preference target indicated by the explicit preference information corresponds or accords with the preference target indicated by the implicit preference information according to the question output from the function 330. Accordingly, the function 360 may acquire the implicit preference information or information regarding the preference target from the function 330.

For example, in a case where the user's answer indicates that the preference target in the question matches with the preference of the user, the function 360 registers the explicit preference information regarding the preference target to the DB 370. The user's answer may be a positive answer to a question inquiring whether the preference target indicated by the implicit preference information output from the function 330 matches with the user preference, for example. In a case where explicit preference information is generated as scores on respective pieces of information regarding content, a score corresponding to the preference information is increased.

In addition, for example, in a case where the user's answer indicates that targets other than the preference target presented in the question do not match with the user preference, the function 360 may perform a negative operation on the explicit preference information regarding the targets that are registered in the DB 370 and other than the preference target. In a case where explicit preference information is generated as scores on respective pieces of information about content, scores corresponding to the targets other than the preference target are decreased.

As described above, the schematic configuration of the agent according to the embodiment of the present disclosure has been explained. As described in the following example, the explicit preference information registered in the DB370 may be used for providing the user with content recommendation or content advertisement, for example.

### (3. Processing Flow)

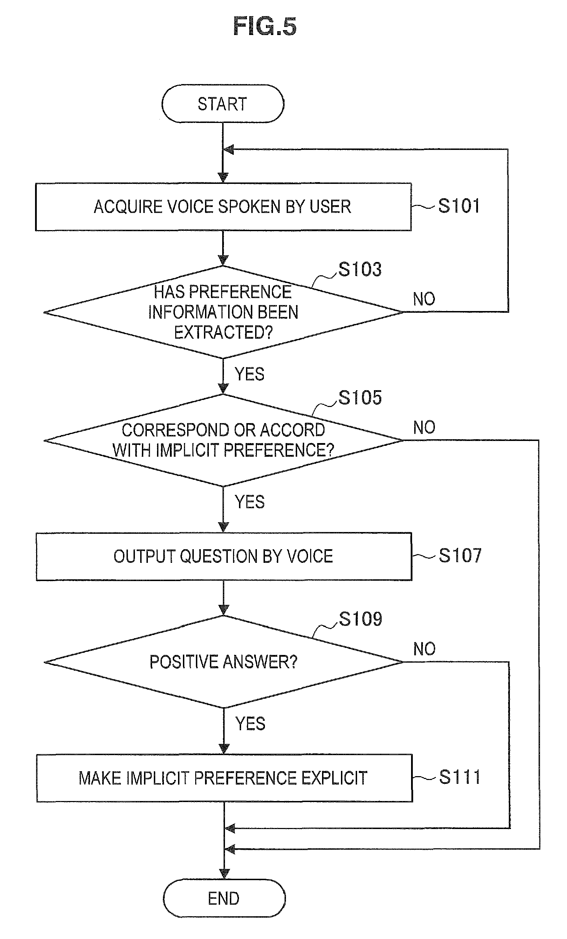

FIG. 5 is a flowchart showing an example of processing performed by an agent according to an embodiment of the present disclosure. In the example shown in FIG. 5, a question to make a preference target explicit is output on the basis of contents of a user's spoken voice supporting content reproduction and information search, the preference target being indicated by implicit preference information that has already been registered.

First, an input-sound acquisition function (not shown in FIG. 4) of the agent 300 acquires a voice spoken by the user (step S101). Subsequently, the function 330 determines whether preference information about the user has been extracted from the spoken voice (step S103). In a case where the preference information has been extracted, the function 330 further determines whether a preference target indicated by the extracted information corresponds or accords with implicit preference of the user indicated by implicit preference information registered in the DB 320 (step S105).

In a case where it is determined that the preference target indicated by the extracted information corresponds or accords with the implicit preference of the user in step S105, the function 330 outputs, by voice, a question inquiring whether the preference target matches with the preference of the user (step S107). An answer to the question may be acquired by the function 330 on the basis of the voice spoken by the user, and contents of the answer may be provided for the function 360. The function 360 determines whether the contents of the answer is positive (step S109).

In a case where the contents of the answer is positive in step S109, the function 360 makes the implicit preference of the user explicit, the implicit preference of the user being specified by the determination in step S105 (step S111). More specifically, the function 360 newly registers, in the DB 370, the preference target corresponding to the implicit preference, or increases a score of the preference target registered in the DB 370, for example.

As described above, the embodiment of the present disclosure has been explained. Though there has been explained the case of using the user preference on the content in the above-described embodiment, embodiments of the present disclosure are not limited thereto. The embodiment is applicable to a case of using a user preference on something other than the content. Examples of the something other than the content include tangible and intangible products, a restaurant, a tourist spot, and other various things.

### (4. Specific Example)

### (4-1. Example of Network Service)

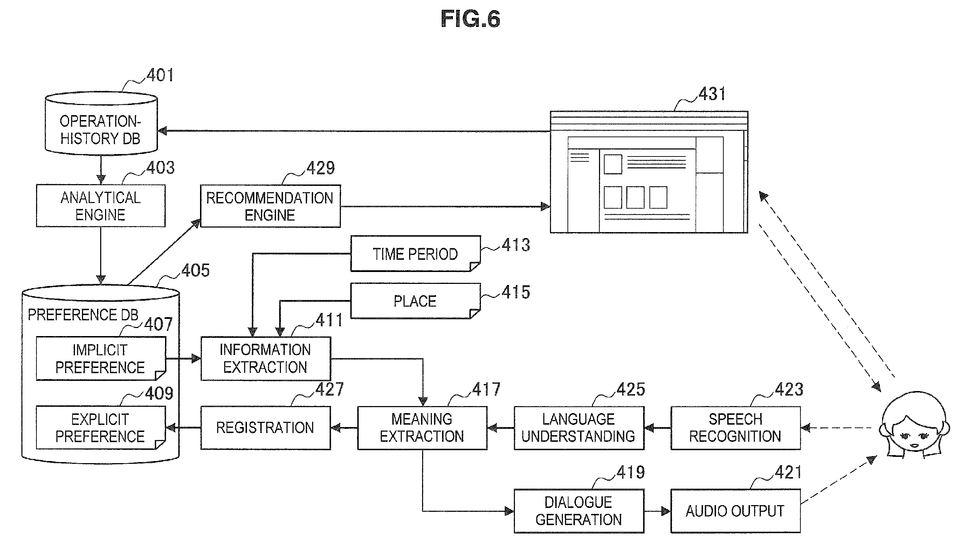

FIG. 6 is a diagram for explaining an example of a network service using an embodiment of the present disclosure. In the example shown in FIG. 6, implicit preference information is collected on the basis of a user activity in a web browser 431. On the basis of the collected implicit preference information, a question about the preference is output to the user by voice, and the answer is acquired form the user also by voice. Depending on the result of the answer, the implicit preference 407 is converted into an explicit preference 407. Next, on the basis of the explicit preference 409 acquired in such a way, content is recommended. Note that, engines and functions in the example shown in FIG. 6 are achieved by the processor 102 of the client device 100 or the processor 202 of the server device200 for example, and at least one of the engines and the functions may be a function of the agent 300.

An operation-history DB 401 accumulates the user activity in the web browser 431 such as information about searching for information regarding the content, purchasing the content, and watching the content through the network. An analytical engine 403 analyzes the user activity accumulated in the operation-history DB 401, and registers information (implicit preference information) about the implicit preference 407 in a preference DB 405. The preference DB 405 in which the implicit preference 407 is registered corresponds with the DB 320 included in the agent 300. In the preference DB 405, information (explicit preference information) about an explicit preference 409 is also registered.

An information-extraction function 411 extracts the information from the implicit preference 407 under a certain condition, and a meaning-extraction function 417 estimates a meaning indicated by the implicit preference 407. In accordance with a result of the estimation, a dialogue-generation function 419 generates a question sentence for a dialogue with the user, and an audio-output function 421 outputs the generated question sentence to the user by voice. A timing of the question-sentence generation based on the information extracted by the information-extraction function 411 may be decided on the basis of a relation between the information that has already been registered as the implicit preference 407 and information to be newly-registered. Alternatively, the timing may be decided on the basis of a relation between the information that has already been registered as the implicit preference 407 and a newly-performed user activity. In addition, the timing of the question-sentence generation may be decided on the basis of a time period 413 and/or a place 415, as described above.

The user answers to the audio-output question by speaking, and a speech-recognition function 423 and a language-understanding function 425 analyzes the spoken voice. The meaning-extraction function 417 again estimates a meaning of textual information acquired from the analysis, and a registration function 427 registers, in the preference DB 405, information about the explicit preference 409 based on the estimated meaning. The preference DB 405 in which the explicit preference 409 is registered corresponds with the DB 370 included in the agent 300.

A recommendation engine 429 generates content-recommendation information for the user based on the explicit preference 4009 accumulated in the preference DB 405, and provides the user with recommendation information and an advertisement based on the recommendation information through the web browser 431, for example.

### (4-2. Example of Scenario)

Hereinafter, there will be described some examples of scenarios regarding the specific example described above. Note that, the following scenarios are merely examples. Targets according to embodiments of the present disclosure are not limited to targets indicated in such scenarios.

### (Scenario 1)

Scores on actors registered in the DB 320:
An actor A is 1.2, an actor B is 1.1, and an actor C is 0.9.

Scores on genres registered in the DB 320:
Comedy is 1.1, and music program is 0.8.

Scores on actors registered in the DB 370:
An actor D is 1.2, an actor E is 1.1, and an actor F is 0.9.

Scores on genres registered in the DB 370:
Hollywood movie is 1.2, animation is 1.1, and documentary is 0.9.

From the voice spoken by the user, the agent 300 gets an instruction that the user wants to watch a drama in which the actor A appears on the TV. While the agent 300 controls the TV and the recorder on the basis of the instruction, the function 330 refers to the DB 320 and determines whether a cast (actor A) who appears in the content to be watched by the user corresponds with a preference target (actor A) registered in the DB 320. In order to inquire of the user whether the preference target (actor A) matches with the user preference, the function 330 generates a question "Do you like the actor A?" and outputs to the user by voice or the like.

In a case where the function 350 has acquired a positive answer from the user such as a spoken voice like "Yes, I like him!", the function 360 makes the preference target (actor A), for which a match with the user preference has been indicated by the question and the answer, explicit. That is, the function 360 additionally registers a score on the actor A in the DB 370. As a result, the scores on the actors registered in the DB 370 may be as follows:

The actor A is 1.2, the actor D is 1.2, the actor E is 1.1, and the actor F is 0.9.

Note that, some genres (drama) of content to be watched by the user do not correspond with the genres of the preference targets registered in the DB 320. Accordingly, the genre "drama" is not made explicit in this scenario. Moreover, in the above case, it is estimated that the user watched the content of the drama because the actor A appears in the drama. Accordingly, it is not necessary for the function 310 to register the genre (drama) of the content in the DB 320.

On the other hand, in a case where the function 350 has received, form the user, a negative answer such as a spoken voice like "Not really." to the question "Do you like the actor A?", the function 310 may newly registers the genre (drama) of the content in the DB 320 instead of making the preference target (actor A) explicit by the function 360. In this case, it is estimated that the user wanted to watch the drama content itself regardless of whether the actor A appears in this drama. Accordingly, the function 330 may further generate a question such as "Do you also like drama?" and may output to the user by voice or the like.

### (Scenario 2)

Scores on genres registered in the DB 320:
Comedy is 1.1, and music program is 0.8.

Scores on genres registered in the DB 370:
Drama is 1.2, and documentary is 0.2.

The user has mainly watched drama content in the past. Accordingly drama has a higher score in the DB 370. However, one day the user watched comedy content by purchasing, renting, or the like. In the agent 300, the function 330 refers to the DB 320 and determines that a genre (comedy) of the content watched by the user corresponds with a preference target (comedy) registered in the DB 320. Subsequently, in order to inquire of the user whether the preference target (comedy) matches with the user preference, the function 330 generates a question "Do you also like comedy?" and outputs to the user by voice or the like.

In a case where the function 350 has acquired a positive answer from the user such as a spoken voice like "Yes, I like!", the function 360 makes the preference target (comedy), for which a match with the user preference has been indicated by the question and the answer, explicit. That is, the function 360 additionally registers a score on comedy in the DB 370. As a result, the scores on the genres registered in the DB 370 may be as follows:
Drama is 1.2, comedy is 1.1, and documentary is 0.2.

### (Scenario 3)

The user is watching comedy content. In this content, comedians (a pair of A and B) and presenters (man C and woman D) appear. In this case, for example, implicit preference information that the function 310 of the agent 300 may register include "comedians (the pair of A and B)", "comedian A", "comedian B", "presenter C", and "presenter D" as casts, and may include "comedy" as a genre. If the implicit preference information is automatically registered regardless of a question to be generated by the function 330, it may be considered that "comedy" is registered as the genre and "comedians (the pair of A and B)" whose appearance length (time length which a cast appears on the screen) is long is registered as a cast.

However, a user preference beyond the mechanical prediction may be recognized if the function 330 generates a question to sort or select the implicit preference information. For example, in a case where the function 330 asks "Who do you like better, comedian A or comedian B?", implicit preference information regarding "comedians (the pair of A and B") may be registered when the function 350 acquires an answer like "Either is fine.", or implicit preference information regarding one of the comedians may be registered when an answer designates one of "comedian A" and "comedian B". For example, in the case of comedy duo, appearing content and appearing time overlap. Accordingly, it is difficult to determine whether both of or one of the comedy duo matches with the user preference. However, it becomes possible to make such determination by using a question as described above.

Alternatively, for example, in a case where the function 330 asks "Who do you like better, comedian A or comedian B?" and the function 350 acquires an answer like "Not really", there is a possibility that the user does not prefer the comedians or does not prefer comedy itself. In this case, the function 330 may ask "Do you like the presenter D?" or the like. When acquiring a positive answer to the question such as "Kind of.", implicit preference information regarding the "presenter D" is registered, and it is not necessary to register implicit preference information regarding the comedians and comedy (or it may be possible to delete the implicit preference information that has once been registered).

In this scenario, in a case of recognizing a clear preference from a user's answer, the preference target may become explicit at this point. For example, in a case of acquiring a very positive answer like "Yes, she is pretty." to the question "Do you like the presenter D?", information about the presenter D may be registered in the DB 370 soon after the answer was acquired.

### (Scenario 4)

From an action history of the user, it is recognized that the user often goes to European cuisine restaurants for lunch and often goes to Japanese cuisine Izakaya for dinner. In this case, implicit preference information regarding a genre "European cuisine" is registered in the DB 320 of the agent 300 in association with a time period "lunch", and implicit preference information regarding a genre "Japanese cuisine" is registered in the DB 320 of the agent 300 in association with a time period "dinner". In such a case, the function 330 may ask "Do you prefer Japanese cuisine for dinner?" when the user searches for somewhere to eat in a dinner time period, and the function 350 acquires a positive answer like "Yes". Subsequently, the function 360 may register explicit preference information regarding a genre "Japanese cuisine" in the DB 370. In this case, the explicit preference information regarding the genre "Japanese cuisine" may be associated with the time period "dinner" in the DB 370.

### (Scenario 5)

In the DB320 of the agent 300, implicit preference information regarding "makeup" is registered. On the basis of this information, a service providing the agent 300 intends to distribute an advertisement for makeup to the user. In this case, the function 330 outputs a question like "Are you interested in makeup?" before distributing the advertisement, and then the advertisement is distributed when the function 350 acquires a positive answer. As described above, the question based on the implicit preference information can also be applied to use other than explicitation of preference. For example, a timing of outputting the question may be a time when another makeup advertisement comes on content that the user is watching, or a time when it is estimated that the user is highly interested in the advertisement from face-expression detection or gaze detection.

### (5. Supplemental Remarks)

For example, the embodiments of the present disclosure may include the above described information processing device (client device or server device), system, information processing method performed by the information processing device or the system, a program for causing the information processing device to function, and a tangible non-transitory medium having the program stored therein.

It should be understood by those skilled in the art that various modifications, combinations, sub-combinations and alterations may occur depending on design requirements and other factors insofar as they are within the scope of the appended claims or the equivalents thereof.

Additionally, the present technology may also be configured as below.
(1) An information processing device including:
   a processor configured to achieve
      a function of registering implicit preference information about a user on the basis of an activity of the user,
      a function of outputting a question to the user by voice on the basis of the implicit preference information,
      a function of acquiring an answer to the question from a voice spoken by the user, and
      a function of registering explicit preference information about the user depending on the answer.
(2) The information processing device according to (1),
   wherein the function of outputting a question outputs a first question that inquires whether a preference target indicated by the implicit preference information matches with a preference of the user, and
   wherein, in a case of acquiring a positive answer to the first question, the function of registering explicit preference information registers the explicit preference information regarding the preference target.
(3) The information processing device according to (2),
   wherein the function of outputting a question outputs the first question in a case where the implicit preference information has already been registered regarding a preference target indicated by newly-registered implicit preference information.
(4) The information processing device according to (2),
   wherein the implicit preference information and the explicit preference information are each preference information regarding content, and
   wherein the function of outputting a question outputs the first question in a case where the implicit preference information has already been registered regarding a preference target appearing in content that the user is watching.
(5) The information processing device according to (4),
   wherein, in a case where the implicit preference information has already been registered regarding each of a first preference target and a second preference target that are appearing in the content that the user is watching, the function of outputting a question outputs the first question about the first preference target, and
   wherein, in a case where a negative answer to the first question is acquired, the function of outputting a question outputs the first question about the second preference target.
(6) The information processing device according to any one of (2) to (5),
   wherein, in a case of acquiring a negative answer to the first question, the function of registering implicit preference information deletes the implicit preference information regarding the preference target.
(7) The information processing device according to any one of (1) to (6),
   wherein the function of registering implicit preference information registers the implicit preference information on the basis of a history of information search performed by the user.
(8) The information processing device according to any one of (1) to (7),
   wherein the function of registering implicit preference information registers the implicit preference information on the basis of an action history of the user.
(9) The information processing device according to any one of (1) to (8),
   wherein the function of registering implicit preference information registers the implicit preference information in association with information regarding a time period or a place in which the activity of the user is performed, and
   wherein the function of outputting a question outputs the question to the user in a case where a time period or a position of the user respectively corresponds or accords with a time period or a place that have been associated with the implicit preference information.
(10) The information processing device according to any one of (1) to (9),
   wherein the function of outputting a question outputs a second question that inquires whether the user is interested in at least one of preference targets indicated by the implicit preference information, and
   wherein the processor further achieves a function of sorting the implicit preference information depending on an answer to the second question.
(11) The information processing device according to (10),
   wherein, in a case where an explicit user preference for at least one of the preference targets is recognized from the answer to the second question, the function of registering explicit preference information registers the explicit preference information regarding the at least one of the preference targets.
(12) An information processing method performed by a processor, the method including:
   registering implicit preference information about a user on the basis of an activity of the user;
   outputting a question to the user by voice on the basis of the implicit preference information;
   acquiring an answer to the question from a voice spoken by the user; and
   registering explicit preference information about the user depending on the answer.
(13) Aprogram for causing a computer to achieve:
   a function of registering implicit preference information about a user on the basis of an activity of the user;
   a function of outputting a question to the user by voice on the basis of the implicit preference information;
   a function of acquiring an answer to the question from a voice spoken by the user; and
   a function of registering explicit preference information about the user depending on the answer.

## Claims

1. An information processing device comprising:
a processor configured to achieve
a function of registering implicit preference information about a user on the basis of an activity of the user,
a function of outputting a question to the user by voice on the basis of the implicit preference information,
a function of acquiring an answer to the question from a voice spoken by the user, and
a function of registering explicit preference information about the user depending on the answer.

2. The information processing device according to claim 1,
wherein the function of outputting a question outputs a first question that inquires whether a preference target indicated by the implicit preference information matches with a preference of the user, and
wherein, in a case of acquiring a positive answer to the first question, the function of registering explicit preference information registers the explicit preference information regarding the preference target.

3. The information processing device according to claim 2,
wherein the function of outputting a question outputs the first question in a case where the implicit preference information has already been registered regarding a preference target indicated by newly-registered implicit preference information.

4. The information processing device according to claim 2,
wherein the implicit preference information and the explicit preference information are each preference information regarding content, and
wherein the function of outputting a question outputs the first question in a case where the implicit preference information has already been registered regarding a preference target appearing in content that the user is watching.

5. The information processing device according to claim 4,
wherein, in a case where the implicit preference information has already been registered regarding each of a first preference target and a second preference target that are appearing in the content that the user is watching, the function of outputting a question outputs the first question about the first preference target, and
wherein, in a case where a negative answer to the first question is acquired, the function of outputting a question outputs the first question about the second preference target.

6. The information processing device according to claim 2,
wherein, in a case of acquiring a negative answer to the first question, the function of registering implicit preference information deletes the implicit preference information regarding the preference target.

7. The information processing device according to claim 1,
wherein the function of registering implicit preference information registers the implicit preference information on the basis of a history of information search performed by the user.

8. The information processing device according to claim 1,
wherein the function of registering implicit preference information registers the implicit preference information on the basis of an action history of the user.

9. The information processing device according to claim 1,
wherein the function of registering implicit preference information registers the implicit preference information in association with information regarding a time period or a place in which the activity of the user is performed, and
wherein the function of outputting a question outputs the question to the user in a case where a time period or a position of the user respectively corresponds or accords with a time period or a place that have been associated with the implicit preference information.

10. The information processing device according to claim 1,
wherein the function of outputting a question outputs a second question that inquires whether the user is interested in at least one of preference targets indicated by the implicit preference information, and
wherein the processor further achieves a function of sorting the implicit preference information depending on an answer to the second question.

11. The information processing device according to claim 10,
wherein, in a case where an explicit user preference for at least one of the preference targets is recognized from the answer to the second question, the function of registering explicit preference information registers the explicit preference information regarding the at least one of the preference targets.

12. An information processing method performed by a processor, the method comprising:
registering implicit preference information about a user on the basis of an activity of the user;
outputting a question to the user by voice on the basis of the implicit preference information;
acquiring an answer to the question from a voice spoken by the user; and
registering explicit preference information about the user depending on the answer.

13. A program for causing a computer to achieve:
a function of registering implicit preference information about a user on the basis of an activity of the user;
a function of outputting a question to the user by voice on the basis of the implicit preference information;
a function of acquiring an answer to the question from a voice spoken by the user; and
a function of registering explicit preference information about the user depending on the answer.
